(19) Europäisches Patentamt
European Patent Office
Office européen des brevets

(11) **EP 4 779 699 A1**

(12) **EUROPEAN PATENT APPLICATION**

(43) Date of publication:
**22.07.2026 Bulletin 2026/30**

(21) Application number: **26151966.4**

(22) Date of filing: **15.01.2026**

(51) International Patent Classification (IPC):
**H01M 4/04** (2006.01)        **H01M 4/13** (2010.01)
**H01M 4/139** (2010.01)        **H01M 4/62** (2006.01)

(52) Cooperative Patent Classification (CPC):
**H01M 4/04; H01M 4/13; H01M 4/139; H01M 4/62**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.01.2025 US 202519027871**

(71) Applicant: **Tesla, Inc.
Austin, TX 78725 (US)**

(72) Inventors:
• **LI, Juchuan
  Austin, 78725 (US)**
• **XUE, Yuan
  Austin, 78725 (US)**
• **LI, Chen
  Austin, 78725 (US)**
• **YANG, Xiaoyun
  Austin, 78725 (US)**

(74) Representative: **Zacco Sweden AB
P.O. Box 5581
Löjtnantsgatan 21
114 85 Stockholm (SE)**

(54) **ELECTRODE FILM MIXTURES WITH SOLVENT ADDITIVES FOR USE IN ENERGY STORAGE DEVICES, AND METHODS THEREOF**

(57) An electrode for use in energy storage devices including an electrode film formed from an electrode film mixture including water and a solvent additive, and methods thereof, are disclosed. The electrode utilizing water and a solvent additive may aid in reducing compressive stress, creases and/or curvature during formation, thereby achieving improved electrode shape and/or strength.

FIG. 2

EP 4 779 699 A1

# EP 4 779 699 A1

**Description**

PRIORITY APPLICATIONS

This application claims the benefit of priority to U.S. Patent Application No. 19/027,871, entitled "ELECTRODE FILM MIXTURES WITH SOLVENT ADDITIVES FOR USE IN ENERGY STORAGE DEVICES, AND METHODS THEREOF," filed on January 17, 2025.

## BACKGROUND

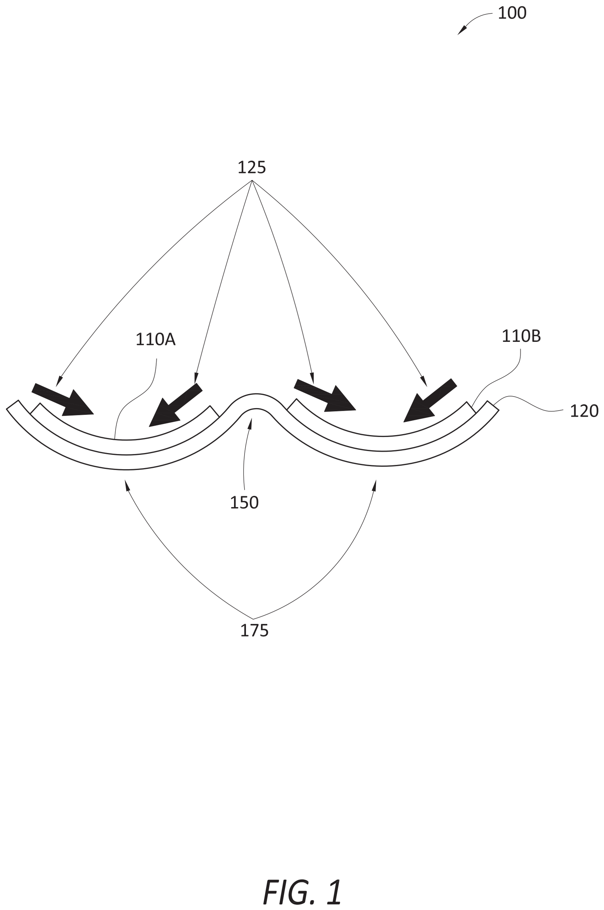

Compressive stresses and forces in electrodes are a typical challenge known to occur during wet electrode manufacturing processes. Conventional wet electrode processes involve mixing a slurry or electrode film mixture, coating a current collector with the electrode film mixture, drying the electrode film mixture onto the current collector, and calendering to form an electrode. Such processes cause electrode curvature and creasing, adding difficulties during the disposal and coating of current collectors. For example, FIG. 1 is a schematic illustration showing a multilane electrode 100 including electrode films 110A and 110B disposed over a current collector 120, wherein the electrode films 110A and 110B are subjected to compressive stresses 125 as they are dried. As shown in FIG. 1, the compressive stresses 125 induce creasing 150 in bare portions of the multilane electrodes 100, and curvature (i.e., negative curvature) 175 in coated portions of the multilane electrodes 100.

Currently, such issues are addressed by adjusting manufacturing conditions and processing steps (e.g., increasing humidity on factory floors during fabrication, limiting idle time between processing steps). However, the manufacturing conditions and steps require that adjustments are performed during a narrow processing window, and may increase the probability of electrochemical performance loss and may not be feasible under certain circumstances such as maintenance involving discontinuation of dehumidifying conditions. As such, improved electrodes with reduced curvature and creasing are desired.

## SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, an electrode film mixture is described. The electrode film mixture includes: a binder, water, an electrode active material, and a solvent additive, wherein the electrode film mixture includes the solvent additive in an amount of at most about 5 wt.%.

In some embodiments, the solvent additive includes a compound selected from the group consisting of ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), 1,3-propene sultone (PRS), dimethoxyethane (DME), methyl acetate (MA), methyl propionate (MP), ethyl acetate (EA), methyl butyrate (MB), and combinations thereof.

In some embodiments, the solvent additive includes a boiling point temperature of at least about 80°C. In some embodiments, the solvent additive is soluble in water. In some embodiments, the electrode film mixture includes the solvent additive in an amount of at least about 0.1 wt.%. In some embodiments, the electrode film mixture includes water in an amount of at least about 0.1 wt.%. In some embodiments, the electrode film mixture further includes a conductive additive.

In another aspect, an electrode preform is described. The electrode preform includes an electrode film mixture disposed over a current collector.

In another aspect, an electrode is described. The electrode includes: an electrode film including a binder, an electrode active material, water residue, a solvent additive residue, and a current collector, wherein the electrode film is disposed over the current collector.

In some embodiments, the electrode includes the solvent additive residue in an amount of at most about 0.1 wt.%. In some embodiments, the electrode includes the water residue in an amount of at most about 0.1 wt.%. In some embodiments, the electrode includes a stress curvature value of at most about 1.5 m-1. In some embodiments, the electrode film includes a thickness of at least about 120 $\mu$m.

In another aspect, an energy storage device is described. The energy storage devices includes: an electrode, a second electrode, a separator disposed between the electrode and second electrode, an electrolyte, and a housing, wherein the electrode, the second electrode, the separator and the electrolyte are disposed within the housing.

In some embodiments, the electrolyte includes a compound selected from the group consisting of ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), 1,3-propene sultone (PRS), dimethoxyethane (DME), methyl acetate (MA), methyl propionate (MP), ethyl acetate (EA), methyl butyrate (MB), and combinations thereof. In some embodiments, the electrolyte and the solvent additive residue include a same compound.

In another aspect, a method of preparing an electrode is described. The method includes: combining a binder, an electrode active material, water and a solvent additive to form an electrode film mixture; depositing the electrode film mixture over a current collector to form an electrode preform; and processing the electrode preform to form an electrode.

In some embodiments, the method further includes diluting the electrode film mixture with water prior to processing the electrode preform. In some embodiments, processing the electrode preform includes drying the electrode preform. In some embodiments, drying the electrode preform is performed at a temperature of at least about 60°C.

BRIEF DESCRIPTION OF THE DRAWINGS

FIG. 1 is a schematic illustration showing multilane electrodes and compressive stresses.
FIG. 2 is a flowchart showing a method of preparing an electrode, according to some embodiments.
FIG. 3 is a graph comparing stress curvature values of electrodes fabricated with various solvent additives and a control electrode, according to some embodiments.
FIG. 4A is an image of an electrode prepared without solvent additives.
FIG. 4B is an image of an electrode prepared with solvent additives, according to some embodiments.
FIG. 5A-1 is an image of a multilane electrode, according to some embodiments.

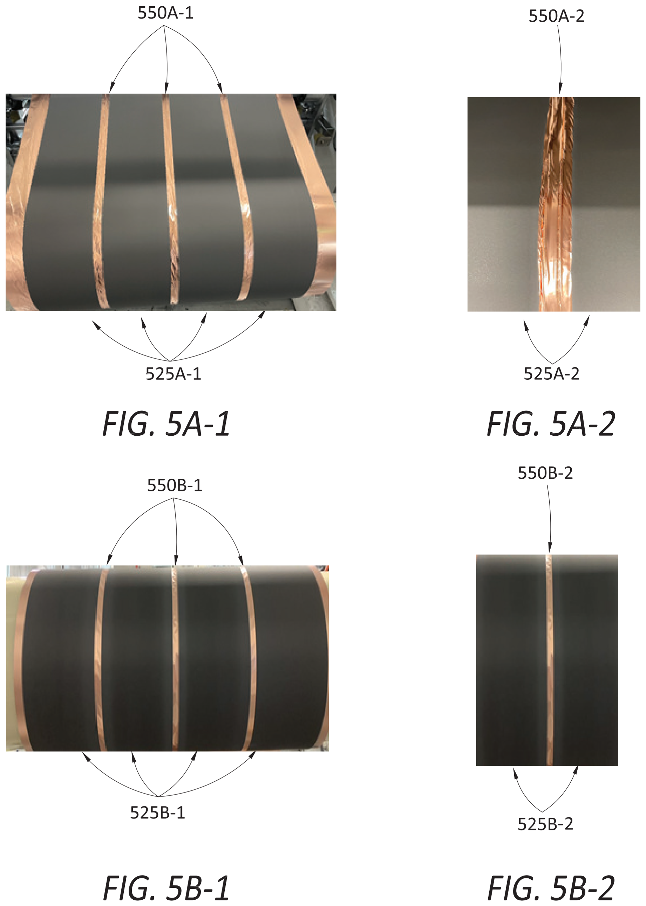

FIG. 5A-2 is a magnified image of the multilane electrode of FIG. 5A-1, according to some embodiments.
FIG. 5B-1 is an image of a multilane electrode, according to some embodiments.
FIG. 5B-2 is a magnified image of the multilane electrode of FIG. 5B-1, according to some embodiments.

It will be clearly understood, though, that the examples and figures are for illustrative purposes only, and are not necessarily restrictive of the scope of the present invention.

DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Electrodes prepared using water and a solvent additive, and methods thereof, are described. An electrode formed from an electrode film mixture including water and a solvent additive disposed over a current collector may reduce or aid in reducing compressive stress, thereby prevent or aid in preventing curvature (e.g., camber, curving, induced negative and/or positive curvature) and/or creasing (e.g., wrinkles) in coated and/or bare portions of an electrode. Methods of preparing such an electrode involve combining water, solvent additives and materials to form an electrode film mixture, coating or disposing the electrode film mixture over a current collector to form an electrode preform, and processing (e.g., drying and/or calendering) the electrode preform to form an electrode. As curvature and creasing typically occur during and/or after processing (e.g., drying) the electrode preform, introducing a solvent additive into an electrode film mixture may reduce or aid in reducing the amount of compressive stress applied on the electrode during and/or after the drying process, and may allow uniform coating of electrode film mixtures over the current collector thereby achieving improved electrode shape and strength.

Method of Preparing an Electrode with Solvent Additives

A method of preparing an electrode with solvent additives include combining a binder, an electrode active material, water, and a solvent additive to form an electrode film mixture, depositing the electrode film mixture on a current collector to form an electrode preform, and processing (e.g., drying and/or calendering) the electrode preform to form an electrode.

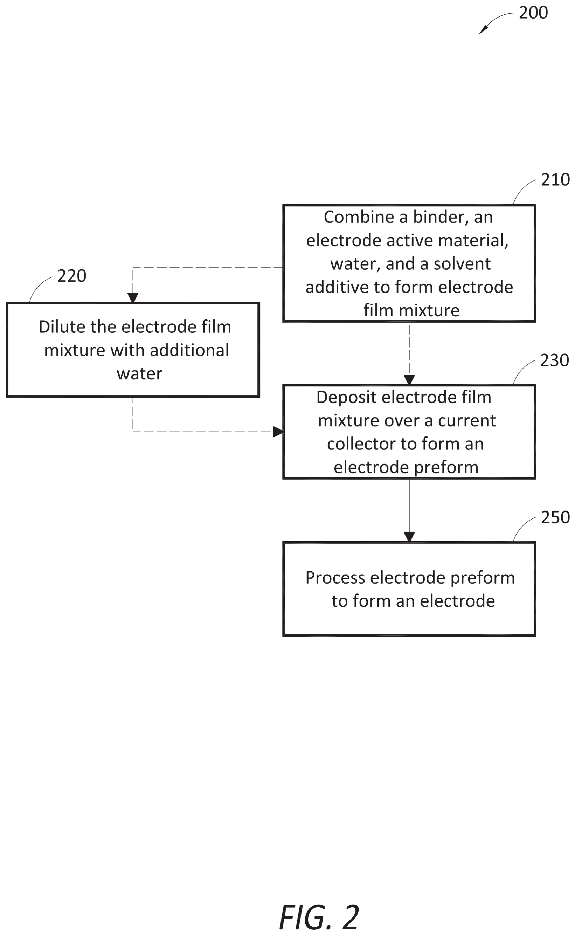

FIG. 2 is a flowchart showing a method 200 of preparing an electrode with reduced compressive stress. As illustrated in FIG. 2, a binder, an electrode active material, water, and a solvent additive is combined to form an electrode film mixture in step 210. In step 230, the electrode film mixture is deposited over a current collector to form an electrode preform. Prior to depositing the electrode film mixture over the current collector, the electrode film mixture may be diluted with additional water in optional step 220. In step 250, the electrode preform may be further processed (e.g., dried and/or calendered) to form an electrode.

The electrode film mixture includes a binder, an electrode active material, water and a solvent additive. In some embodiments, the electrode film mixture is prepared by dissolving binder in water to form a precursor mixture, and subsequently adding the electrode active material and solvent additive to the precursor mixture. In some embodiments, a conductive additive may be added to or included with the precursor mixture and/or electrode film mixture. In some embodiments, the method further includes diluting the electrode film mixture with additional water.

In some embodiments, processing the electrode preform may include drying and/or calendering the electrode preform. In some embodiments, drying is performed in an oven and/or kiln. In some embodiments, the electrode preform is dried at a drying temperature of, of about, of at least, of at least about, of at most, or of at most about, 100°C, 98°C, 96°C, 94°C, 92°C, 90°C, 88°C, 86°C, 84°C, 82°C, 80°C, 78°C, 76°C, 74°C, 72°C, 70°C, 68°C, 66°C, 64°C, 62°C, 60°C, 58°C, 56°C, 54°C, 52°C, 50°C, 48°C, 46°C, 44°C, 42°C, 40°C, 38°C, 36°C, 34°C, 32°C and 30°C, or any range of values therebetween. In some embodiments, processing the electrode preform includes calendering the electrode preform. In some embodiments, the drying of the electrode preform is performed prior to calendering.

In some embodiments, multiple electrode film mixtures are disposed over a current collector in multiple lanes separated by bare portions to form a multilane electrode preform. In some embodiments, the multilane electrode preform may be processed to form a multilane electrode, and then separated (e.g., cut) at each of the bare portions to form a plurality of electrodes. Multilane electrodes include a foil layer (i.e., a current collector) coated with an electrode film material to form a plurality of coated lanes (i.e., portions of the foil layer covered by the electrode film material) and a plurality of bare lanes (i.e., exposed portions of the foil layer). In some embodiments, the multilane electrode may be a double-sided multilane electrode that includes coated lanes on both sides of the foil layer (e.g., the top and bottom).

Electrode Film Mixtures, Electrode Preforms and Electrodes with Solvent Additives

An electrode film mixture described herein includes a binder, water, an electrode active material and a solvent additive. An electrode may be formed from an electrode film mixture disposed over a current collector and processed to form an electrode film. The electrode preform prior to processing includes a current collector and the same or essentially the same composition as the electrode film mixture.

In some embodiments, the electrode film mixture and/or electrode preform further comprises a conductive additive. In some embodiments, the conductive additive comprises carbon black, carbon nanotubes, and combinations thereof.

In some embodiments, the electrode film mixture and/or electrode preform includes the solvent additive in an amount of, of about, of at least, of at least about, of at most, or of at most about, 5 wt.%, 4.9 wt.%, 4.8 wt.%, 4.7 wt.%, 4.6 wt.%, 4.5 wt.%, 4.4 wt.%, 4.3 wt.%, 4.2 wt.%, 4.1 wt.%, 4 wt.%, 3.9 wt.%, 3.8 wt.%, 3.7 wt.%, 3.6 wt.%, 3.5 wt.%, 3.4 wt.%, 3.3 wt.%, 3.2 wt.%, 3.1 wt.%, 3 wt.%, 2.9 wt.%, 2.8 wt.%, 2.7 wt.%, 2.6 wt.%, 2.5 wt.%, 2.4 wt.%, 2.3 wt.%, 2.2 wt.%, 2.1 wt.%, 2 wt.%, 1.9 wt.%, 1.8 wt.%, 1.7 wt.%, 1.6 wt.%, 1.5 wt.%, 1.4 wt.%, 1.3 wt.%, 1.2 wt.%, 1.1 wt.%, 1. wt.%, 0.9 wt.%, 0.8 wt.%, 0.7 wt.%, 0.6 wt.%, 0.5 wt.%, 0.4 wt.%, 0.3 wt.%, 0.2 wt.% and 0.1 wt.% , or any range of values therebetween. In some embodiments, the electrode film mixture and/or electrode preform includes the solvent additive in an amount of at most about 5 wt.%. In some embodiments, the electrode film mixture and/or electrode preform includes the solvent additive in an amount of at least about 0.1 wt.%.

In some embodiments, the solvent additive comprises a compound selected from the group consisting of ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), 1,3-propene sultone (PRS), dimethoxyethane (DME), methyl acetate (MA), methyl propionate (MP), ethyl acetate (EA), methyl butyrate (MB), and combinations thereof. In some embodiments, the solvent additive comprises a compound selected from the group consisting of ethylene carbonate (EC), propylene carbonate (PC), vinylene carbonate (VC), fluoroethylene carbonate (FEC), dimethyl carbonate (DMC), ethyl methyl carbonate (EMC), dimethoxyethane (DME), and combinations thereof.

In some embodiments, the solvent additive is soluble in water. In some embodiments, the solvent additive comprises a boiling point temperature of, of about, of at least, of at least about, of at most, or of at most about, 80°C, 82°C, 84°C, 86°C, 88°C, 90°C, 92°C, 94°C, 96°C, 98°C, 100°C, 102°C, 104°C, 106°C, 108°C, 110°C, 112°C, 114°C, 116°C, 118°C, 120°C, 122°C, 124°C, 126°C, 128°C, 130°C, 132°C, 134°C, 136°C, 138°C, 140°C, 142°C, 144°C, 146°C, 148°C, 150°C, 152°C, 154°C, 156°C, 158°C, 160°C, 162°C, 164°C, 166°C, 168°C, 170°C, 172°C, 174°C, 176°C, 178°C, 180°C, 182°C, 184°C, 186°C, 188°C, 190°C, 192°C, 194°C, 196°C, 198°C, 200°C, 202°C, 204°C, 206°C, 208°C, 210°C, 212°C, 214°C, 216°C, 218°C, 220°C, 222°C, 224°C, 226°C, 228°C, 230°C, 232°C, 234°C, 236°C, 238°C, 240°C, 242°C, 244°C, 246°C, 248°C and 250°C, or any range of values therebetween.

In some embodiments, the solvent additive comprises a melting point temperature of, of about, of at least, of at least about, of at most, or of at most about, -60°C, - 58°C, -56°C, -54°C, -52°C, -50°C, -48°C, -46°C, -44°C, -42°C, -40°C, -38°C, -36°C, -34°C, - 32°C, -30°C, -28°C, -26°C, -24°C, -22°C, -20°C, -18°C, -16°C, -14°C, -12°C, -10°C, -8°C, - 6°C, -4°C, -2°C, 0°C, 2°C, 4°C, 6°C, 8°C, 10°C, 12°C, 14°C, 16°C, 18°C, 20°C, 22°C, 24°C, 26°C, 28°C, 30°C, 32°C, 34°C, 36°C, 38°C and 40°C, or any range of values therebetween.

In some embodiments, the electrode film and/or electrode comprises a solvent additive residue in an amount of, of about, of at least, of at least about, of at most, or of at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1.0 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.% and 2 wt.% , or any range of values therebetween. In some embodiments, the electrode film and/or electrode comprises water residue in an amount of, of about, of at least, of at least about, of at most, or of at most about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1.0 wt.%, 1.1 wt.%, 1.2 wt.%, 1.3 wt.%, 1.4 wt.%, 1.5 wt.%, 1.6 wt.%, 1.7 wt.%, 1.8 wt.%, 1.9 wt.% and 2 wt.% , or any range of values therebetween.

Residual stress, as a result of uneven binder contraction upon drying, may exist in an electrode, and cause curvature in electrodes. The stress curvature value may be used to determine the stress or degree of deformation of an electrode. The stress curvature value can be calculated by the Stoney Equation incorporating the product of compressive stress in electrodes ($\sigma$), Poisson's ratio of substrate ($v_s$), and electrode thickness ($h_f$) versus Young's modulus of substrate ($E_s$) and the thickness of substrate ($h_s$). The stress curvature value can be characterized by *(k) or* ( $\frac{1}{R}$ ), below, where R refers to a radius of the curvature.

$$\frac{1}{R} = k = \frac{\sigma \cdot 6 \cdot h_f \, (1 - v_s)}{(E_s + h_s)^2}$$

In some embodiments, the electrode includes a stress curvature value of at most about, 1.75 m$^{-1}$, 1.7 m$^{-1}$, 1.65 m$^{-1}$, 1.6 m$^{-1}$, 1.55 m$^{-1}$, 1.5 m$^{-1}$, 1.45 m$^{-1}$, 1.4 m$^{-1}$, 1.35 m$^{-1}$, 1.3 m$^{-1}$, 1.25 m$^{-1}$, 1.2 m$^{-1}$, 1.15 m$^{-1}$, 1.1 m$^{-1}$, 1.05 m$^{-1}$, 1 m$^{-1}$, 0.95 m$^{-1}$, 0.9 m$^{-1}$, 0.85 m$^{-1}$, 0.8 m$^{-1}$, 0.75 m$^{-1}$, 0.7 m$^{-1}$, 0.65 m$^{-1}$, 0.6 m$^{-1}$, 0.55 m$^{-1}$, 0.5 m$^{-1}$, 0.45 m$^{-1}$, 0.4 m$^{-1}$, 0.35 m$^{-1}$, 0.3 m$^{-1}$ and 0.25 m$^{-1}$, or any range of values therebetween.

In some embodiments, the electrode film comprises a thickness of, of about, of at least, of at least about, of at most, or of at most about, 100 $\mu$m, 102 $\mu$m, 104 $\mu$m, 106 $\mu$m, 108 $\mu$m, 110 $\mu$m, 112 $\mu$m, 114 $\mu$m, 116 $\mu$m, 118 $\mu$m, 120 $\mu$m, 122 $\mu$m, 124 $\mu$m, 126 $\mu$m, 128 $\mu$m, 130 $\mu$m, 132 $\mu$m, 134 $\mu$m, 136 $\mu$m, 138 $\mu$m, 140 $\mu$m, 142 $\mu$m, 144 $\mu$m, 146 $\mu$m, 148 $\mu$m, 150 $\mu$m, 152 $\mu$m, 154 $\mu$m, 156 $\mu$m, 158 $\mu$m, 160 $\mu$m, 162 $\mu$m, 164 $\mu$m, 166 $\mu$m, 168 $\mu$m, 170 $\mu$m, 172 $\mu$m, 174 $\mu$m, 176 $\mu$m, 178 $\mu$m, 180 $\mu$m, 182 $\mu$m, 184 $\mu$m, 186 $\mu$m, 188 $\mu$m, 190 $\mu$m, 192 $\mu$m, 194 $\mu$m, 196 $\mu$m, 198 $\mu$m and 200 $\mu$m, or any range of values therebetween.

An electrode active material (e.g., cathode active material, anode active material) may be utilized in an electrode film mixture, electrode film, electrode preform, and/or electrode for an energy storage device.

In some embodiments, the electrode active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO$_4$ or "LFP"), lithium manganese iron phosphate (e.g., LiMn$_{0.6}$Fe$_{0.4}$PO$_4$ or "LMFP"), lithium nickel manganese cobalt oxide (i.e., LiNi$_x$Mn$_y$Co$_{1-x-y}$O$_2$ or "NMC"), lithium nickel cobalt aluminum oxide (i.e., LiNi$_x$Co$_y$Al$_z$O$_2$ or "NCA"), lithium manganese oxide ("LMO"), lithium nickel manganese oxide ("LNMO"), lithium carbon nickel manganese oxide ("LCNMO"), lithium cobalt oxide ("LCO"), or combinations thereof. In some embodiments, the cathode active material includes at least two of LFP, LMFP, NMC, NCA, LMO, LNMO, LCO, and combinations thereof. In some embodiments, the cathode active material is an iron phosphate-based active material. In some embodiments, iron phosphate-based active materials include LiFePO$_4$ (i.e., "lithium iron phosphate" and "LFP") and LiMn$_{1-x}$Fe$_x$PO$_4$ (i.e., "lithium manganese iron phosphate" and "LMFP") (e.g., LiMn$_{0.6}$Fe$_{0.4}$PO$_4$ or LiMn$_{0.8}$Fe$_{0.2}$PO$_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the electrode active material is an anode active material. In some embodiments, anode active materials can include, for example, an insertion material (such as carbon, graphite, and/or graphene), an alloying/de alloying material (such as silicon, silicon oxide, tin, and/or tin oxide), a metal alloy or compound (such as Si-Al, and/or Si-Sn), lithium titanate ("LTO"), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode. In some embodiments, the anode active material includes one or more of carbon, hard carbon, graphite, common natural graphite, synthetic or artificial graphite, silicon, Si-C, tin, tin oxide, lithium titanate, and combinations thereof.

In some embodiments, the electrode film mixture and/or electrode film comprises the electrode active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film mixture and/or electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode film mixture and/or electrode film comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film mixture and/or electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film mixture and/or electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film mixture and/or electrode film, or any range of values therebetween. In some embodiments, the conductive additive is carbon black.

In some embodiments, the electrode film mixture and/or electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), polyacrylate, co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder includes sodium carboxymethylcellulose (NaCMC), lithium carboxymethylcellulose (LiCMC), styrene-butadiene rubber (SBR), poly(acrylic acid) (PAA), polyacrylonitrile (PAN), polyvinyl alcohol (PVA), and combinations thereof. In some embodiments, the electrode film mixture and/or electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

Electrodes and Energy Storage Devices

An energy storage system or device includes a positive electrode (i.e., cathode), a negative electrode (i.e., anode), a separator disposed therebetween, and an electrolyte positioned within a housing. The electrode includes an electrode film mixture disposed over a current collector. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 $\mu$m, 100

μm, 50 μm, 40 μm, 30 μm, 20 μm, 15 μm, 10 μm, 5 μm, or any range of values therebetween.

In some embodiments, the electrode may be a wet electrode. A "wet" electrode, "wet process" electrode, or slurry electrode, is an electrode prepared by at least one step involving a slurry, electrode film mixture, or electrode preform of active material(s), binder(s), and optionally additive(s), even if a subsequent drying step removes moisture and/or solvents from the electrode or electrode film mixture. Thus, a wet electrode, wet electrode film mixture, or wet electrode preforms will include at least one or more processing solvents, processing solvent residues, and/or processing solvent impurities. In some embodiments, a wet electrode, wet electrode film mixture, or wet electrode preform formed with solvent additives will include additional solvent residue compared to a wet electrode, wet electrode film mixture, or wet electrode preform formed without solvent additives. Such wet processed electrodes are in contrast to electrode films prepared by a dry electrode fabrication process in which no or substantially no solvents are used to form a dry electrode film, and thereby the active layer or electrode film formed from a dry electrode film mixture using the dry fabrication process may be free from, or substantially free from, any processing additives such as solvents and solvent residues resulting therefrom.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below.

$$Normalized\ Circularity = \min_{i=1,2,..,n} \left( \frac{Nonideal\ Spiral\ Geometry}{Ideal\ Spiral\ Geometry} \right)$$

The nonideal (real) spiral geometry is given by measured Cartesian and polar coordinates $(x, y, \theta, r)$ and the ideal spiral geometry is derived from an Archimedean spiral according to $r = \alpha\theta + \beta$. The geometry of a spiral (ideal or nonideal) can be characterized by curvature (K), such as the polar curvature parameterization below.

$$K(\theta) = \frac{|r^2 + 2r'^2 - rr''|}{(r^2 + r'^2)^{3/2}}$$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate ($LiPF_6$), lithium bis(trifluorometha-nesulfonyl)imide (LiFSI), lithium tetrafluoroborate ($LiBF_4$), lithium perchlorate ($LiClO_4$), lithium bis(trifluoromethansulfo-nyl)imide ($LiN(SO_2CF_3)_2$), lithium trifluoromethansulfonate ($LiSO_3CF_3$), lithium bis(oxalato)borate ($LiB(C_2O_4)_2$), lithium bis(fluorosulfonyl)imide ($LiN(SO_2F)_2$, lithium difluoro(oxalato)borate ($LiC_2BF_2O_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

The electrolyte includes a liquid solvent (i.e., solvent, electrolyte solvent). The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system (i.e., electrolyte additive), and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, the electrolyte and the solvent additive and/or solvent additive residue include a same compound. In some embodiments, the electrolyte solvent and the solvent additive and/or solvent additive residue include a same compound. In some embodiments, the electrolyte additive and the solvent additive and/or solvent additive residue include a same compound.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

EXAMPLES

Example embodiments of the present disclosure, including processes, materials and/or resultant products, are described in the following examples.

Example 1 - Stress Curvature

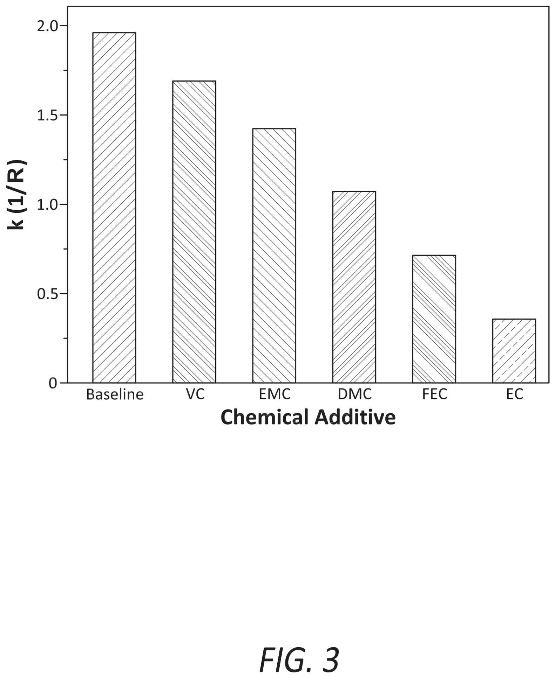

FIG. 3 is a graph showing stress curvature values of electrodes fabricated with various solvent additives and an electrode fabricated without solvent additives. As shown in FIG. 3, electrodes fabricated with solvent additives including 1 wt.% each of vinylene carbonate (VC), ethyl methyl carbonate (EMC), dimethyl carbonate (DMC), fluoroethylene carbonate (FEC), and ethylene carbonate (EC) showed reduced stress curvature values compared to the stress curvature value of a baseline electrode fabricated without solvent additives.

Example 2 - Comparison of Electrodes with and without Solvent Additives

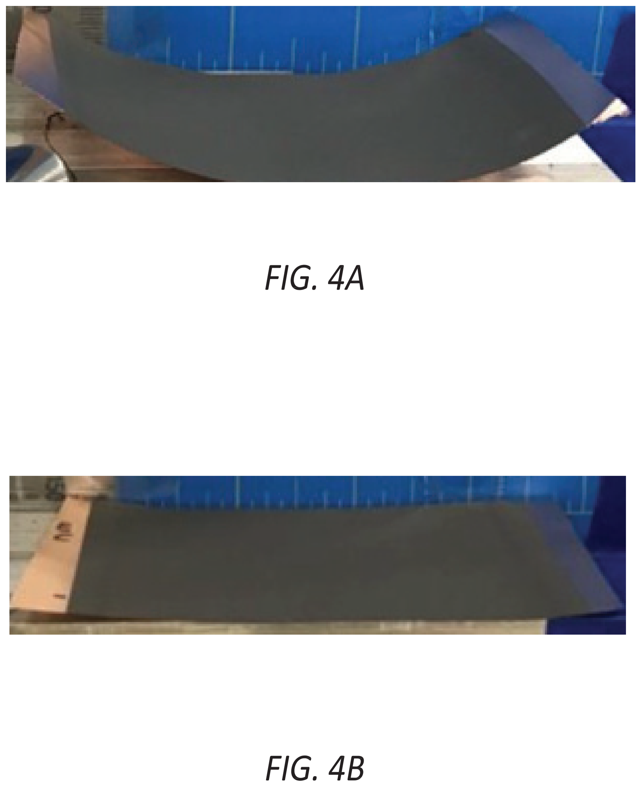

FIG. 4A is an image of an electrode prepared without solvent additives, resulting in an electrode exhibiting compressive stress induced negative curvature. FIG. 4B is an image of an electrode prepared with 1 wt.% of ethylene carbonate (EC) additive, resulting in an electrode exhibiting reduced compressive stress induced negative curvature.

Example 3 - Comparison of Multilane Electrodes with and without Solvent Additives

FIG. 5A-1 is an image of a multilane electrode formed from an electrode film mixture with water and without a solvent additive. FIG. 5A-2 is a magnified image of the multilane electrode. As shown inFIG. 5A-1and 5A-2, the multilane electrode includes coated lanes 525A-1, 525A-2 and bare lanes 550A-1, 550A-2, wherein the bare lanes 550A-1, 550A-2 showed creases between the coated lanes 525A-1, 525A-2. Curvature and crease as a result of compressive stress induced negative curvature are visible in FIG. 5A-2.

FIG. 5B-1 is an image of a multilane electrode formed from an electrode film mixture with water and 1 wt.% of ethylene carbonate (EC) additive. FIG. 5B-2 is a magnified image of the multilane electrode. As shown in FIGS. 5B-1 and 5B-2, the multilane electrodes include coated lanes 525B-1, 525B-2 and bare lanes 550B-1, 550B-2, wherein the bare lanes 550A-1, 550A-2, 550B-1, 550B-2 between the coated lanes 525B-1, 525B-2 showed a curvature-and-crease-free foil between electrodes due to the utilization of ethylene carbonate (EC) additive and reduced compressive stress induced negative curvature.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. An electrode film mixture, comprising:

   a binder;
   water;
   an electrode active material; and
   a solvent additive, wherein the electrode film mixture comprises the solvent additive in an amount of at most 5 wt.%.

2. The electrode film mixture of Claim 1, wherein the solvent additive comprises a compound selected from the group consisting of ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), 1,3-propene sultone (PRS), dimethoxyethane (DME), methyl acetate (MA), methyl propionate (MP), ethyl acetate (EA), methyl butyrate (MB), and combinations thereof; and/or wherein the solvent additive is soluble in water.

3. The electrode film mixture of Claim 1 or 2, wherein the solvent additive has a boiling point temperature of at least 80°C.

4. The electrode film mixture of any of the preceding claims, wherein the electrode film mixture comprises the solvent additive in an amount of at least 0.1 wt.% and/or water in an amount of at least 0.1 wt.%.

5. The electrode film mixture of any of the preceding claims, further comprising a conductive additive.

6. A method of preparing an electrode, comprising:

   combining a binder, an electrode active material, water and a solvent additive to form an electrode film mixture according to any one of Claims 1 to 5;
   depositing the electrode film mixture over a current collector to form an electrode preform; and
   processing the electrode preform to form an electrode.

7. The method of Claim 6, further comprising diluting the electrode film mixture with water prior to processing the electrode preform.

8. The method of Claim 6 or 7, wherein processing the electrode preform comprises drying the electrode preform, preferably at a temperature of at least 60°C.

9. An electrode obtained by drying the electrode film of any one of Claims 1 to 5, comprising:
a current collector and an electrode film disposed over the current collector, the electrode film comprising: a binder; an electrode active material; water residue; and a solvent additive residue in an amount of at most 0.1 wt.%.

10. The electrode of Claim 9, wherein the solvent additive residue is of a solvent additive as defined in Claim 2, and/or wherein the electrode comprises a water residue in an amount of at most 0.1 wt.%.

11. The electrode of Claim 9 or 10, wherein the electrode has a stress curvature value of at most 1.5 m$^{-1}$ and/or wherein the electrode film has a thickness of at least 120 $\mu$m.

12. An energy storage device, comprising:

   the electrode of any one of Claims 9 to 11;
   a second electrode;
   a separator disposed between the electrode and second electrode;
   an electrolyte; and
   a housing, wherein the electrode, the second electrode, the separator and the electrolyte are disposed within the housing.

13. The energy storage device of Claim 12, wherein the electrolyte comprises a compound selected from the group consisting of ethylene carbonate (EC), propylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), 1,3-propene sultone (PRS), dimethoxyethane (DME), methyl acetate (MA), methyl propionate (MP), ethyl acetate (EA), methyl butyrate (MB), and combinations thereof.

14. The energy storage device of Claim 12 or 13, wherein the electrolyte and the solvent additive residue comprise a same compound.

15. An electrode preform, comprising a current collector having the mixture of any of Claims 1 to 5 deposited thereon.

100

125

110A

110B

120

150

175

FIG. 1

200

210

Combine a binder, an electrode active material, water, and a solvent additive to form electrode film mixture

220

Dilute the electrode film mixture with additional water

230

Deposit electrode film mixture over a current collector to form an electrode preform

250

Process electrode preform to form an electrode

*FIG. 2*

*FIG. 3*

*FIG. 4A*

*FIG. 4B*

550A-1

525A-1

*FIG. 5A-1*

550A-2

525A-2

*FIG. 5A-2*

550B-1

525B-1

*FIG. 5B-1*

550B-2

525B-2

*FIG. 5B-2*

**EUROPEAN SEARCH REPORT**

Application Number

EP 26 15 1966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 525 590 A (GUANGZHOU TINCI MATERIALS TECH CO LTD ET AL.) 6 February 2024 (2024-02-06) * paragraphs [0102] - [0105]; claims 1-15 * ----- | 1-15 | INV. H01M4/04 H01M4/13 H01M4/139 H01M4/62 |
| A | CN 115 275 103 A (BYD CO LTD) 1 November 2022 (2022-11-01) * claims 1-15 * ----- | 1-15 | |

TECHNICAL FIELDS
SEARCHED      (IPC)

H01M

The present search report has been drawn up for all claims

| Place of search | Date of completion of the search | Examiner |
|---|---|---|
| Munich | 5 June 2026 | Szekely, Noemi Kinga |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 4 779 699 A1

ANNEX TO THE EUROPEAN SEARCH REPORT
ON EUROPEAN PATENT APPLICATION NO.

EP 26 15 1966

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2026

| Patent document cited in search report | | Publication date | Patent family member(s) | | Publication date |
|---|---|---|---|---|---|
| CN 117525590 | A | 06-02-2024 | CN | 117525590 A | 06-02-2024 |
| | | | DE | 212024000325 U1 | 20-02-2026 |
| | | | WO | 2025113667 A1 | 05-06-2025 |
| CN 115275103 | A | 01-11-2022 | CN | 115275103 A | 01-11-2022 |
| | | | EP | 4593106 A1 | 30-07-2025 |
| | | | JP | 7840493 B2 | 03-04-2026 |
| | | | JP | 2025532578 A | 01-10-2025 |
| | | | KR | 20250044928 A | 01-04-2025 |
| | | | US | 2025246688 A1 | 31-07-2025 |
| | | | WO | 2024067290 A1 | 04-04-2024 |

EPO FORM P0459

For more details about this annex : see Official Journal of the European Patent Office, No. 12/82

**EP 4 779 699 A1**

**REFERENCES CITED IN THE DESCRIPTION**

**Patent documents cited in the description**

- US 02787125